# FASCICULE DE BREVET EUROPEEN

(11) **EP 3 802 146 B1**
(45) Date de publication et mention de la délivrance du brevet: **24.08.2022**
(21) Numéro de dépôt: 19729691.6
(22) Date de dépôt: 04.06.2019
(51) Int. Cl.: B44C 1/17, B41F 16/00

(54) **MARQUAGE À CHAUD POUR LA DÉCORATION D'UNE PIÈCE DE CARROSSERIE**
HEISSPRÄGUNG ZUM DEKORIEREN EINES TEILS EINER FAHRZEUGKAROSSERIE
HOT STAMPING FOR DECORATING A PART OF A VEHICLE BODY

(30) Priorité: 05.06.2018 FR 1854866
(43) Date de publication de la demande: 14.04.2021
(73) Titulaire: Compagnie Plastic Omnium, 69007 Lyon (FR)
(72) Inventeur: MOULIN, Gilles, 01150 Chazey-sur-Ain (FR); D'ACHON, Claire, 69120 Vaulx-en-Velin (FR)
(74) Mandataire: LLR
(86) Numéro de dépôt international: PCT/EP2019/064400
(87) Numéro de publication internationale: WO 2019/233972

(56) Documents cités:
- EP-A2- 1 897 700
- US-A- 5 637 172
- US-A1- 2012 242 773
- US-A1- 2017 326 860

## Description

L'invention concerne le domaine de l'automobile, plus particulièrement celui de la décoration de pièces de carrosserie, par exemple de grilles, de calandres, d'éléments de protection d'un ouvrant, de bandeaux d'un hayon, de pare-chocs avant ou arrière ou de toits.

Il est souvent nécessaire d'améliorer l'aspect esthétique des pièces de carrosserie afin de les rendre plus attrayantes pour le consommateur, ou pour se différencier de ses concurrents. Plusieurs méthodes sont connues, telles que la peinture ou l'impression de motifs, par exemple par marquage à chaud. Un exemple de méthode et de dispositif permettant l'impression de motif par marquage à chaud est décrit dans les documents US 2017/326860 A1 et US 2012/242773 A1.

Cependant, un tel dispositif présente notamment l'inconvénient d'être encombrant, couteux et complexe à fabriquer si on souhaite l'utiliser sur des pièces de carrosserie présentant des formes complexes. En effet, le dispositif comprend un bras comprenant un tampon mobile, à coulissement vertical au droit d'une pièce à décorer et d'un film décoratif. Ce dispositif est particulièrement adapté aux pièces planes. L'encombrement du bras rend son utilisation pour des pièces aux formes complexes compliquée voire impossible pour certaines zones de la pièce de carrosserie. En outre, adapter ce dispositif pour le rendre facilement utilisable avec des pièces de carrosserie présentant des formes complexes serait couteux et complexe.

Par ailleurs, ce dispositif ne permet pas un changement facile du film décoratif ou un positionnement adapté du film décoratif par rapport à la zone de la pièce à décorer dans le cas d'un film décoratif avec motif.

L'invention a notamment pour but de remédier à ces inconvénients.

À cet effet, l'invention a pour objet un dispositif de marquage à chaud d'une pièce de carrosserie selon la revendication 1.

Ainsi, on obtient un dispositif dans lequel la tête peut effectuer des mouvements avec un grand degré de liberté, ce qui lui permet notamment d'atteindre et de décorer des portions d'une surface d'une pièce de carrosserie à décorer qui ne seraient pas atteignables avec un autre dispositif. Notamment, le bras est ainsi apte à incliner la tête dans une orientation qui lui permet d'être perpendiculaire aux différentes zones de la pièce de carrosserie à décorer, même si ces zones ne sont pas toutes dans le même plan ou dans des plans parallèles entre eux. Une fois que le bras s'est déplacé par rapport à la pièce de carrosserie à décorer, on peut prévoir une rotation de la tête pour ajuster la position de cette dernière afin d'orienter le film selon différents angles par rapport à la pièce. Il est ainsi possible d'adapter l'orientation du film à la géométrie de la pièce à décorer et donc d'atteindre des parties de la pièce qui ne seraient pas accessibles autrement. Il est également possible d'adapter l'orientation du film pour obtenir un résultat esthétique particulier, par exemple pour donner un sens particulier à un motif décoratif. En outre, ces changements d'orientation permettent d'optimiser les surfaces du film décoratif qui sont utilisées afin d'en gaspiller le moins possible.

La bandelette comprend ainsi au moins deux épaisseurs qui sont formées par le film support et le film décoratif. Le film support peut être fait de toute matière connue de l'homme du métier comme pouvant servir de film support dans un procédé de marquage à chaud. Par exemple, le film support peut être fait en poly(téréphtalate d'éthylène) (PET). Le film décoratif peut être fait de toute matière connue de l'homme du métier comme pouvant servir de film décoratif dans un procédé de marquage à chaud. Il peut comprendre des pigments de couleur, des hologrammes ou être métallisé. Le film décoratif peut par exemple être monochrome. Alternativement, le film décoratif peut comprendre plusieurs couleurs différentes, ou encore des zones transparentes, translucides, ou semi-opaques. Ce film décoratif peut aussi avoir des zones texturées. On peut prévoir que le film décoratif représente un dégradé d'une même couleur ou de plusieurs couleurs différentes. On peut également prévoir que le film décoratif comprend un motif représentant par exemple une forme géométrique particulière qui peut être répétée tout le long du film. On peut aussi prévoir que plusieurs motifs différents se succèdent tout le long du film. On peut bien entendu prévoir que la bandelette comprend d'autres films ou couches, par exemple une couche d'adhésifs, une couche protectrice tel qu'un vernis, ou une couche pelable permettant de faciliter la séparation du film décoratif du film support.

De manière avantageuse, le film décoratif comprend plusieurs motifs décoratifs qui se succèdent le long du film décoratif, au moins un des motifs décoratifs ayant une forme et/ou une couleur et/ou une texture différente des autres motifs décoratifs.

De cette façon, avec une même bandelette on peut décorer de manière variée une pièce de carrosserie. Plus particulièrement, cette caractéristique, en association avec la grande liberté de mouvement du bras et de la tête, permet avec un seul dispositif de décorer plusieurs parties d'une pièce de carrosserie de forme complexe avec des motifs décoratifs différents. Cette solution présente donc l'avantage d'être compacte et économique. On peut par exemple prévoir que le film décoratif comprend plusieurs séquences répétées de motifs décoratifs le long du film décoratif. Par exemple, une séquence peut comprendre une succession de motifs décoratifs dans laquelle au moins un des motifs décoratifs est différent des autres par une forme et/ou une couleur et/ou une texture. Une telle séquence peut par exemple correspondre à l'ensemble des motifs décoratifs destinés à être appliqués sur une pièce de carrosserie donnée.

Avantageusement, les moyens de pression sont aptes à plaquer la bandelette contre la pièce de carrosserie.

De cette façon, le film décoratif et/ou une éventuelle couche adhésive est au contact de la pièce de carrosserie et peut être transféré sur cette dernière lors d'un procédé de marquage à chaud. Les moyens de pression permettent d'assurer une bonne application du film décoratif.

On peut prévoir que les moyens d'application ont une forme adaptée à la forme de la bandelette et/ou du film décoratif et/ou d'un éventuel motif décoratif présent sur le film décoratif. De préférence, les moyens de pressions sont positionnés au droit d'un plan de la bandelette et sont aptes à appliquer une pression selon une direction normale à ce plan.

De préférence, les moyens de pression sont aptes à être mobile en rotation ou en translation tout en appliquant une pression sur la bandelette.

La forme adaptée peut ainsi être sur la pièce de carrosserie, avec un moyen de pression « standard ». Des moyens de pression aptes à être mobile en rotation peuvent par exemple être de type rouleau. Des moyens de pressions aptes à être mobile en translation peuvent par exemple être de type patin. Dans ces deux cas, le bras peut par exemple être apte à déplacer la tête le long de la zone à décorer en déroulant la bandelette et en appliquant la pression en même temps.

De manière préférée, la tête est montée de manière amovible sur le bras.

Ainsi, il est possible de retirer la tête du bras et de la remplacer par une autre tête. On peut par exemple la remplacer par une tête neuve une fois que la tête est usagée. Cette solution est avantageuse économiquement puisqu'elle évite de remplacer l'ensemble du bras ou du dispositif. Par ailleurs, il est possible de remplacer la tête par une autre tête présentant un film décoratif différent de la première tête par exemple un film décoratif ayant une couleur différente. À nouveau, cette solution est avantageuse économiquement puisqu'elle évite d'avoir recours à plusieurs dispositif et/ou plusieurs bras lorsqu'on souhaite déposer des films décoratifs différents sur une même pièce de carrosserie. On peut prévoir que le dispositif comprend un support apte à recevoir une ou plusieurs têtes. Ces têtes sont aptes à remplacer la tête amovible une fois que celle-ci est retirée du bras. On peut par exemple prévoir que le bras est commandé pour se diriger vers le support apte à recevoir les têtes et pour récupérer une des têtes présentes sur ce support. Ce changement peut être fait de façon automatisée. Par exemple, le dispositif comprenant le bras et une première tête dépose un premier film décoratif sur une première zone à décorer puis la première tête est retirée du bras et une seconde tête est mise en place, cette deuxième tête comprenant un deuxième film décoratif différent du premier, et une deuxième zone à décorer est décorée avec ce deuxième film décoratif. On peut prévoir au moins autant de tête que de zones à décorer. L'utilisation de plusieurs têtes avec un seul bras présente non seulement un avantage économique mais également un gain de place, le dispositif étant plus compacte. Lorsque le changement de tête est fait de façon automatisée, il permet en outre un gain de temps et nécessite moins de main d'œuvre. On peut bien entendu prévoir que le bras motorisé est un robot.

De préférence, le dispositif comprend au moins deux bras motorisés et au moins deux têtes, les bras portant chacun une tête respective.

De cette façon, il est possible d'accélérer le procédé de marquage à chaud. On peut prévoir que les deux têtes ont un même film décoratif. On peut également prévoir que chaque tête présente un film décoratif différent. Cela permet par exemple de supprimer l'étape de changement de tête dans le cas où la tête est amovible et est remplacée afin de changer de film décoratif.

Selon l'invention, la tête comprend les moyens de déroulement et/ou la bandelette.

Le dispositif est ainsi plus compact. En outre, il est particulièrement avantageux de pouvoir déplacer la bandelette et ses moyens de déroulement en même temps que la tête. On assure de cette façon que la bandelette est toujours bien positionnée par rapport à la tête pour permettre une bonne application du film.

Dans un mode de réalisation, les moyens de déroulement sont constitués par une paire de rouleaux, et la paire de rouleaux étant une première paire et la bandelette étant une première bandelette, la tête comprend en outre au moins une deuxième paire de rouleaux aptes à dérouler une deuxième bandelette et des moyens de pression aptes à appliquer une pression sur la deuxième bandelette.

On obtient ainsi un dispositif plus compact. On peut prévoir qu'une même tête comprend deux films différents chacun apte, par exemple suite à une rotation de la tête, à être en regard d'une pièce de carrosserie à décorer.

Dans un mode de réalisation particulier, on peut prévoir que deux têtes sont montées mobiles en rotation sur l'extrémité du bras. À nouveau, le dispositif est de cette façon plus compact.

Avantageusement, les moyens de pressions comprennent au moins un tampon.

Le tampon est par exemple apte à appuyer contre une face de la bandelette, de préférence contre une face du film support. Dans un mode de réalisation préféré, la tête comprend plusieurs tampons ayant des formes et/ou des dimensions différentes.

De préférence, le tampon est apte à couper au moins une portion de la bandelette.

De préférence encore, la portion de la bandelette qui est coupée comprend au moins une partie du film décoratif. Le film support lui se déforme sous l'action du tampon mais n'est pas coupé. On peut ainsi déposer le film décoratif sur la pièce de carrosserie à décorer tout en maintenant une bandelette continue. On peut prévoir qu'une éventuelle couche adhésive et/ou une éventuelle couche protectrice est également coupée par le tampon. Dans un mode de réalisation préféré, le tampon est adapté au profil de la zone à décorer.

De manière préférée, le tampon est monté amovible sur la tête.

Il est ainsi possible de remplacer le tampon, soit par ce qu'il est usé, soit afin d'utiliser un tampon présentant une forme et/ou des dimensions différentes.

De manière avantageuse, la tête comprend plusieurs tampons.

De préférence, les tampons ont des dimensions et/ou des formes différentes.

On peut prévoir que le dispositif comprend un organe apte à changer le tampon utilisé. On peut ainsi adapter le tampon utilisé (sa forme et/ou ses dimensions) à la zone de la pièce à décorer et/ou au film décoratif. Ce changement peut bien entendu se faire avant un procédé de marquage à chaud ou en cours de procédé.

Avantageusement, les moyens de pression sont aptes à appliquer une pression comprise entre 30 et 40 kg/cm² sur la bandelette.

Il s'agit des valeurs de pression permettant d'obtenir un bon résultat de marquage à chaud. Elles permettent notamment une bonne impression du film décoratif sur la pièce de carrosserie à décorer. Une pression trop faible peut entrainer un défaut d'impression du film décoratif. Une pression trop forte peut, elle, entrainer une dégradation de la bandelette, que ce soit le film décoratif ou le film support.

De préférence, le dispositif comprend des moyens de chauffage des moyens de pression à une température comprise entre 120°C et 250°C, de préférence entre 200°C et 215°C.

Ces températures permettent d'obtenir un meilleur marquage à chaud. Plus particulièrement, cette gamme de température permet d'assurer la séparation du film décoratif de la bandelette et son impression sur la pièce de carrosserie. Une température trop faible présente un risque que la séparation et/ou l'impression ne se fasse pas complètement, voire pas du tout. Une température trop élevée présente un risque que le film décoratif et/ou le film support soient dégradés. L'homme du métier peut adapter la température utilisée en fonction du nombre et de la nature des films compris dans la bandelette.

L'invention concerne également un procédé de marquage à chaud , selon la revendication 15, utilisant un dispositif tel que décrit précédemment.

De préférence, dans ce procédé :
- on commande un déplacement du bras motorisé portant la tête et on commande une rotation de la tête par rapport au bras de manière à disposer la tête en regard d'une surface destinée à être marquée à chaud,
- on applique une pression comprise entre 30 et 40 kg/cm² à l'aide des moyens de pression sur la bandelette comprenant le motif décoratif plaquée contre la surface destinée à être marquée à chaud, et on chauffe à une température comprise entre 120°C et 250°C, de préférence entre 200°C et 215°C.

Comme indiqué précédemment, le déplacement du bras motorisé et la rotation de la tête permettent d'obtenir un grand degré de liberté de mouvement et ainsi de pouvoir marquer des pièces de carrosserie présentant des formes complexes. Cela permet notamment de marquer des zones d'une pièce de carrosserie qui se situent dans des plans différents, ou, plus particulièrement, des zones d'une pièce de carrosserie qui ne se situent pas dans des plans qui sont parallèles entre eux.

Les valeurs de pression et de température, comme indiqué plus-haut, permettent un meilleur résultat de marquage à chaud.

De manière préférée, on change la tête par une autre tête après avoir marqué à chaud la surface destinée à être marquée à chaud.

Avantageusement, les moyens de pressions comprennent un tampon correspondant à une zone à décorer, le procédé comprenant en outre une étape dans laquelle on change le tampon par un autre tampon présentant des dimensions et/ou une forme différente.

De manière avantageuse, les précédentes étapes du procédé ayant permis de réaliser un marquage à chaud de la surface avec un des motifs décoratifs du film décoratif, le procédé comprend en outre les étapes suivantes :
- on commande un déplacement du bras motorisé portant la tête et on commande une rotation de la tête par rapport au bras de manière à disposer la tête en regard d'une surface destinée à être marquée à chaud différente de la surface précédemment marquée à chaud,
- on déroule la bandelette à l'avant de la tête de manière à placer en regard des moyens
   de pression une portion du film décoratif qui comprend un motif décoratif ayant une forme et/ou une couleur et/ou une texture différente de celle du motif décoratif précédemment appliqué,
- on applique une pression comprise entre 30 et 40 kg/cm² à l'aide des moyens de pression sur la bandelette comprenant le motif décoratif plaquée contre la surface destinée à être marquée à chaud, et on chauffe à une température comprise entre 120°C et 250°C, de préférence entre 200°C et 215°C.

De cette manière, le procédé de marquage à chaud est plus rapide et plus économique puisqu'un seul dispositif et une seule bandelette permettent de marquer à chaud avec des motifs décoratifs différents des zones différentes d'une même pièce de carrosserie.

Une pièce de carrosserie peut être obtenue à l'aide du dispositif et/ou du procédé tel que décrit précédemment.

Un véhicule peut comprendre une pièce de carrosserie obtenue à l'aide du dispositif et/ou du procédé tel que décrit précédemment.

Nous allons maintenant présenter plusieurs modes de réalisation de l'invention donnés à titre d'exemples non limitatifs et à l'appui des figures annexées sur lesquelles :
- la figure 1 est une vue schématique en coupe d'un dispositif selon l'invention ;
- la figure 2 est une vue schématique en coupe d'une partie du dispositif de la figure 1 ainsi que d'une pièce de carrosserie destinée à décorer ;
- la figure 3 est une vue schématique en coupe de la tête et de la pièce de carrosserie à décorer des figures 1 et 2 ;
- la figure 4 est une vue schématique en coupe d'une partie d'une tête d'un dispositif selon un second mode de réalisation de l'invention ainsi que d'une pièce de carrosserie à décorer ; et
- la figure 5 est une vue schématique de face d'une calandre de véhicule automobile décorée à l'aide du dispositif de la figure 1 ou 4.

Dans les deux modes de réalisation présentés, les éléments qui sont identiques entre les deux modes de réalisation ont une même référence numérique.

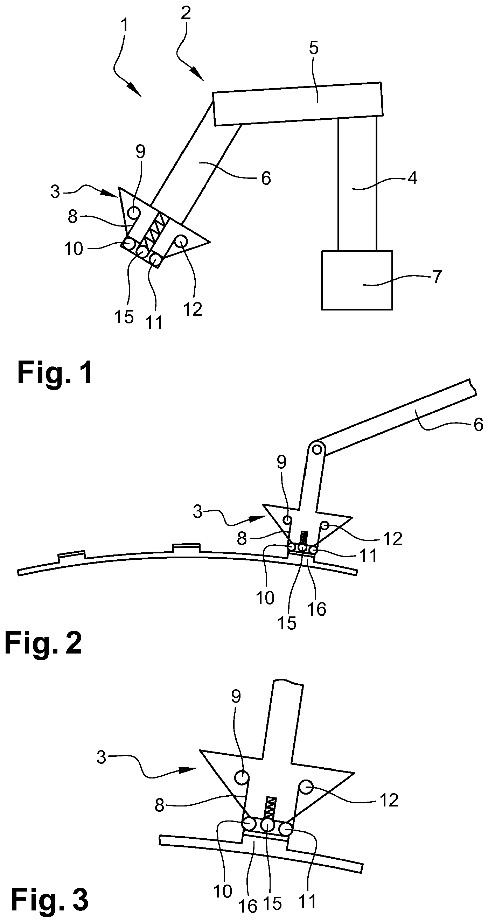

### Premier mode de réalisation (figures 1 à 3)

Dans ce premier mode de réalisation, le dispositif 1 comprend notamment un bras 2 motorisé et apte à se déplacer, une tête 3 montée mobile en rotation sur une extrémité du bras 2, et une bandelette 8.

Le bras 2 comprend trois segments principaux : un segment proximal 4, un segment médial 5 et un segment distal 6 (voir figure 1). Les trois segments 4, 5, 6 sont sensiblement identiques entre eux. Ils ont une forme générale allongée et présentent chacun deux extrémités longitudinales : une extrémité proximale et une extrémité distale. Le segment proximal 4 est fixé à un bâti 7 par son extrémité proximale et n'est pas mobile par rapport à celui-ci. L'extrémité proximale du segment médial 5 est montée mobile en rotation sur l'extrémité distale du segment proximal 4. L'extrémité distale du segment médial 5 est montée mobile en rotation sur l'extrémité proximale du segment distal 6. Ce montage permet au bras 2 d'augmenter ses possibilités de mouvement et donc de se positionner de façon à pouvoir marquer à chaud des pièces de carrosserie présentant des formes complexes et pour lesquelles l'utilisation d'un dispositif classique serait compliquée voire impossible. On peut bien entendu prévoir un nombre plus faible ou plus élevé de segments du bras 2, par exemple deux, quatre, cinq, six, sept, huit, neuf ou dix. On peut également prévoir que tous les segments ne sont pas sensiblement identiques, par exemple que les segments ont des dimensions et/ou des formes différentes entre eux.

La tête 3 est montée mobile en rotation au niveau de l'extrémité distale du segment distal 6.

La tête 3 comprend des moyens de déroulement de la bandelette 8 à l'avant de la tête 3.

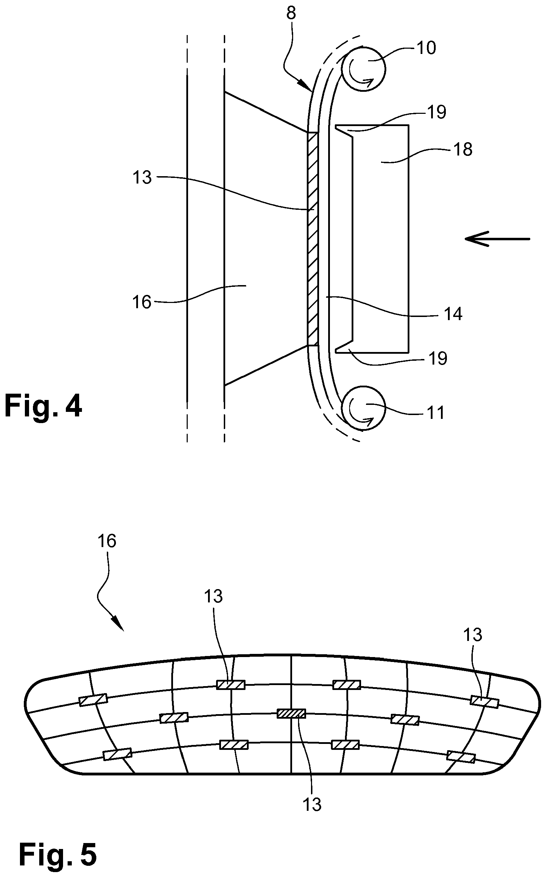

La bandelette 8 montrée en détails dans la figure 4 présente une structure identique à la bandelette montrée de manière simplifiée dans les figures 1 à 3. Ainsi, les références numériques utilisées pour la figure 4 (deuxième mode de réalisation) montrant des éléments qui sont présents mais non visibles sur les figures 1 à 3 sont utilisées pour décrire le premier mode de réalisation. Dans le cas présent, les moyens de déroulement de la bandelette 8 sont formés par des premier, deuxième, troisième et quatrième rouleaux 9, 10, 11, 12. Les premier et quatrième rouleaux 9, 12 sont mobiles en rotation selon un premier sens de rotation et les deuxième et troisième rouleaux 10, 11 sont mobile en rotation selon un second sens de rotation, opposé au premier sens de rotation. Par référence au côté par lequel le dispositif est représenté sur la figure 1, les premier et quatrième rouleaux 9, 12 sont mobiles en rotation selon un sens horaire et les deuxième et troisième rouleaux 10 et 11 sont mobiles en rotation selon un sens antihoraire. Chaque rouleaux 9, 10, 11, 12 présente un axe de rotation. Les axes de rotation sont tous distincts les uns des autres et parallèles entre eux. Les deuxième et troisième rouleaux 10, 11 sont disposés au niveau d'une surface externe de la tête 3. Les premier et quatrième rouleaux 9, 12 sont eux présents dans un corps de la tête 3. Le premier rouleau 9 est celui sur lequel est enroulé de la bandelette 8 non encore utilisée, c'est-à-dire qui comprend au moins un film décoratif 13 et un film support 14. Entre les premier et deuxième rouleaux 9, 10, la bandelette 8 n'a pas encore été utilisée et comprend donc toujours le film décoratif 13 et le film support 14. Entre les deuxième et troisième rouleaux 10, 11, la bandelette 8 a, avant que le marquage à chaud ait eu lieu, toujours un film décoratif 13 et un film support 14. Après le marquage à chaud, il reste peu ou pas de film décoratif 13 sur la bandelette 8. Cette dernière est ensuite enroulée sur le quatrième rouleau 12. Tout au long de son trajet de rouleaux en rouleaux, la bandelette 8 est maintenue tendue par les rouleaux. Une telle position facilite le passage entre les rouleaux 9, 10, 11, 12 et évite notamment que la bandelette 8 ne se désengage d'un des rouleaux 9, 10, 11, 12. Plus particulièrement, les deuxième et troisième rouleaux 10, 11 sont aptes à tendre la bandelette 8 afin que la portion de la bandelette 8 en regard de la zone de la pièce de carrosserie 16 destinée à être décorée soit sensiblement plane avant que le marquage à chaud ait lieu.

Le film décoratif 13 peut être fait de toute matière connue de l'homme du métier comme pouvant servir de film décoratif dans un procédé de marquage à chaud. Il peut comprendre des pigments de couleur, des hologrammes ou être métallisé. Le film décoratif 13 peut par exemple être monochrome. Alternativement, le film décoratif peut comprendre plusieurs couleurs différentes. On peut également prévoir que le film décoratif 13 n'est pas coloré de façon continue mais plutôt de façon discontinue. On peut prévoir que le film décoratif 13 représente un dégradé d'une même couleur ou de plusieurs couleurs différentes. On peut également prévoir que le film décoratif 13 comprend un motif représentant par exemple une forme géométrique particulière qui peut être répétée tout le long du film 13. On peut aussi prévoir que plusieurs motifs différents se succèdent tout le long du film décoratif 13, ces motifs pouvant par exemple différer par leur forme et/ou leur couleur et/ou leur texture.

Le film support 14 peut être fait de toute matière connue de l'homme du métier comme pouvant servir de film support dans un procédé de marquage à chaud. Dans le cas présent, le film support 14 est fait en poly(téréphtalate d'éthylène) (PET).

Bien entendu, on peut prévoir que la bandelette 8 comprend d'autres films ou couches, par exemple une couche d'adhésifs, une couche protectrice tel qu'un vernis, ou une couche pelable permettant de faciliter la séparation du film décoratif 13 du film support 14.

La tête 3 comprend également des moyens de pression 15 aptes à appliquer une pression sur la bandelette 8. Dans le cas présent, les moyens de pression 15 sont aptes à appliquer une pression sur une face du film de support 14 qui n'est pas en contact avec le film décoratif 13. La pression appliquée par les moyens de pression 15 permet d'assurer une bonne impression du film décoratif 13 sur la zone de la pièce de carrosserie 16 à décorer.

La pièce de carrosserie 16 à décorer peut être posée sur un contre-support qui empêche que la pièce 16 ne se déforme ou se casse sous l'effet de la pression exercée par le dispositif 1 lors du marquage à chaud.

Un exemple de procédé pouvant être utilisé avec le dispositif 1 est le suivant :
- on commande un déplacement du bras 2 motorisé portant la tête 3 et on commande une rotation de la tête 3 par rapport au bras 2 de manière à disposer la tête 3 en regard d'une surface de la pièce de carrosserie 16 destinée à être marquée à chaud,
- on applique une pression comprise entre 30 et 40 kg/cm² à l'aide des moyens de pression 15 sur la bandelette 8 comprenant le motif décoratif 13 plaquée contre la surface de la pièce de carrosserie 16 destinée à être marquée à chaud, et on chauffe à une température comprise entre 120°C et 250°C, de préférence entre 200°C et 215°C.

Le déplacement du bras 2 motorisé se fait par rotation des segments 4, 5, 6 du bras 2 les uns par rapport aux autres. Ces déplacements permettent de placer le film décoratif 13 de la bandelette 8 en regard de la zone de la carrosserie 16 destinée à être marquée à chaud.

On peut prévoir que la tête 3 est montée amovible sur le bras 2 et qu'elle est remplacée par une autre tête 3 comprenant un film décoratif 13 différent.

On peut également prévoir que la bandelette 8 comprend un film décoratif 13 comprenant plusieurs motifs décoratifs qui se succèdent le long du film décoratif, au moins un des motifs décoratifs ayant une forme et/ou une couleur et/ou une texture différente des autres motifs décoratifs. Ainsi, afin de marquer à chaud une pièce de carrosserie 16 avec des motifs décoratifs différent, il n'est pas nécessaire de changer la tête 3, il suffit de faire dérouler la bandelette 8 devant la tête 3 jusqu'à placer le motif décoratif souhaité en regard des moyens de pression 15.

Un exemple de pièce de carrosserie 16 marquée à chaud, et donc décorée, par le procédé selon l'invention est montré à la figure 5. La pièce a été décorée avec des films décoratifs 13 différents grâce notamment au changement de la tête 3 au cours du procédé de marquage à chaud.

### Deuxième mode de réalisation (figure 4)

Le dispositif selon le deuxième mode de réalisation est identique à celui du premier mode de réalisation à l'exception que les moyens de pression 15 comprennent un tampon 18. Ce tampon 18 est au contact de la face du film support 14 qui n'est pas en contact avec le film décoratif 13. Dans le cas présent, le tampon 18 a une forme qui est complémentaire de la forme de la zone de la pièce de carrosserie 16 destinée à être marquée à chaud. Le tampon 18 comprend une saillie périphérique 19. Cette saillie périphérique 19 permet de faciliter le détachement ou découpage du film décoratif 13 sans endommager le film support 14. On peut prévoir que le tampon 18 est amovible et peut être remplacé par un autre tampon, par exemple un tampon 18 qui présente une autre forme de manière à être complémentaire avec une autre zone à décorer de la pièce de carrosserie 16. Le tampon 18 exerce une pression sur la bandelette 8 par un mouvement de translation rectiligne selon une direction sensiblement perpendiculaire à un plan dans lequel se trouve la portion de la bandelette 8 comprenant le film décoratif 13 destiné à être appliqué.

L'invention n'est pas limitée aux modes de réalisation présentés et d'autres modes de réalisation , couverts par la portée des revendications, apparaîtront clairement à l'homme du métier.

On peut par exemple prévoir un dispositif 1 et un procédé aptes à appliquer simultanément un film décoratif 13 par marquage à chaud sur plusieurs zones d'une même pièce de carrosserie 16 ou de pièces de carrosserie différentes. Par exemple, on peut prévoir que les moyens de pression 15 sont aptes à appliquer une pression simultanément à des endroits différents de la bandelette 8, ces endroits correspondants aux zones à décorer de la pièce de carrosserie 16. On peut également prévoir que le dispositif 1 comprend plusieurs moyens de pression 15 qui sont chacun aptes à appliquer une pression sur une zone respective de la bandelette 8 correspondant à une zone à décorer de la pièce de carrosserie 16.

## Revendications

1. Dispositif (1) de marquage à chaud d'une pièce de carrosserie (16), comprenant :
- une bandelette (8) comprenant un film support (14) et un film décoratif (13) ;
- au moins un bras (2) motorisé apte à se déplacer ;
- au moins une tête (3) montée mobile en rotation sur une extrémité du bras, la tête comprenant des moyens de pression (15) aptes à appliquer une pression sur la bandelette ; et
- des moyens (9, 10, 11, 12) de déroulement de la bandelette à l'avant de la tête,
**caractérisé en ce que** la tête (3) comprend les moyens de déroulement (9, 10, 11, 12) et/ou la bandelette (8).

2. Dispositif (1) selon la revendication 1, dans lequel le film décoratif (13) comprend plusieurs motifs décoratifs qui se succèdent le long du film décoratif, au moins un des motifs décoratifs ayant une forme et/ou une couleur et/ou une texture différente des autres motifs décoratifs.

3. Dispositif (1) selon l'une quelconque des revendications précédentes, dans lequel les moyens de pression (15) sont aptes à plaquer la bandelette (8) contre la pièce de carrosserie (16).

4. Dispositif (1) selon l'une quelconque des revendications précédentes, dans lequel les moyens de pression (15) sont aptes à être mobile en rotation ou en translation tout en appliquant une pression sur la bandelette (8).

5. Dispositif (1) selon l'une quelconque des revendications précédentes, dans lequel la tête (3) est montée de manière amovible sur le bras (2).

6. Dispositif (1) selon l'une quelconque des revendications précédentes, dans lequel le dispositif comprend au moins deux bras (2) motorisés et au moins deux têtes (3), les bras portant chacun une tête respective.

7. Dispositif (1) selon l'une quelconque des revendications précédentes, les moyens de déroulement sont constitués par une paire de rouleaux, et la paire de rouleaux étant une première paire et la bandelette étant une première bandelette, la tête comprend en outre au moins une deuxième paire de rouleaux aptes à dérouler une deuxième bandelette et des moyens de pression aptes à appliquer une pression sur la deuxième bandelette.

8. Dispositif (1) selon l'une quelconque des revendications précédentes, dans lequel les moyens de pressions (15) comprennent au moins un tampon (18).

9. Dispositif (1) selon la revendication précédente, dans lequel le tampon (18) est apte à couper au moins une portion de la bandelette (8).

10. Dispositif (1) selon l'une quelconque des revendications 8 ou 9, dans lequel le tampon (18) est monté amovible sur la tête (3).

11. Dispositif (1) selon l'une quelconque des revendications 8 à 10, dans lequel la tête (3) comprend plusieurs tampons (18).

12. Dispositif (1) selon la revendication précédente, dans lequel les tampons (18) ont des dimensions et/ou des formes différentes.

13. Dispositif (1) selon l'une quelconque des revendications précédentes, dans lequel les moyens de pression (15) sont aptes à appliquer une pression comprise entre 30 et 40 kg/cm² sur la bandelette (8).

14. Dispositif (1) selon l'une quelconque des revendications précédentes, comprenant des moyens de chauffage des moyens de pression (15) à une température comprise entre 120°C et 250°C, de préférence entre 200°C et 215°C.

15. Procédé de marquage à chaud utilisant un dispositif (1) selon l'une quelconque des revendications 1 à 14.

16. Procédé de marquage à chaud selon la revendication 15, **caractérisé en ce que** :
- on commande un déplacement du bras (2) motorisé portant la tête (3) et on commande une rotation de la tête par rapport au bras de manière à disposer la tête en regard d'une surface destinée à être marquée à chaud,
- on applique une pression comprise entre 30 et 40 kg/cm² à l'aide des moyens de pression (15) sur la bandelette (8) comprenant le film décoratif (13) plaquée contre la surface destinée à être marquée à chaud, et on chauffe à une température comprise entre 120°C et 250°C, de préférence entre 200°C et 215°C.

17. Procédé selon la revendication 16, dans lequel on change la tête (3) par une autre tête après avoir marqué à chaud la surface destinée à être marquée à chaud.

18. Procédé selon la revendication 16, dans lequel les moyens de pressions (15) comprennent un tampon (18) correspondant à une zone à décorer, le procédé comprenant en outre une étape dans laquelle on change le tampon par un autre tampon présentant des dimensions et/ou une forme différente.

19. Procédé selon la revendication 16 et la revendication 2, dans lequel, les étapes précédentes ayant permis de réaliser un marquage à chaud de la surface avec un des motifs décoratifs du film décoratif (13), le procédé comprend en outre les étapes suivantes :
- on commande un déplacement du bras (2) motorisé portant la tête (3) et on commande une rotation de la tête par rapport au bras de manière à disposer la tête en regard d'une surface destinée à être marquée à chaud différente de la surface précédemment marquée à chaud,
- on déroule la bandelette (8) à l'avant de la tête la tête de manière à placer en regard des moyens de pression (15) une portion du film décoratif (13) qui comprend un motif décoratif ayant une forme et/ou une couleur et/ou une texture différente de celle du motif décoratif précédemment appliqué,
- on applique une pression comprise entre 30 et 40 kg/cm² à l'aide des moyens de pression (15) sur la bandelette (8) comprenant le motif décoratif (13) plaquée contre la surface destinée à être marquée à chaud, et on chauffe à une température comprise entre 120°C et 250°C, de préférence entre 200°C et 215°C.

## Patentansprüche

1. Vorrichtung (1) zum Heißprägen eines Karosserieteils (16), aufweisend:
- einem Streifen (8), der eine Trägerfolie (14) und eine Dekorfolie (13) aufweist;
- mindestens einen motorisierten Arm (2), der sich bewegen kann;
- mindestens einen Kopf (3), der drehbar an einem Ende des Arms montiert ist, wobei der Kopf Druckmittel (15) aufweist, die geeignet sind, einen Druck auf den Streifen auszuüben;und
- Mittel (9, 10, 11, 12) zum Abwickeln des Streifens vor dem Kopf, **dadurch gekennzeichnet, dass** der Kopf (3) die Abwickelmittel (9, 10, 11, 12) und/oder den Streifen (8) aufweist.

2. Vorrichtung (1) nach Anspruch 1, wobei die Dekorfolie (13) mehrere dekorative Muster aufweist, die entlang der Dekorfolie aufeinander folgen, wobei mindestens eines der dekorativen Muster eine Form und/oder Farbe und/oder Textur hat, die sich von den anderen dekorativen Mustern unterscheidet.

3. Vorrichtung (1) nach einem der vorhergehenden Ansprüche, wobei die Druckmittel (15) eingerichtet sind, den Streifen (8) gegen das Karosserieteil (16) zu drücken.

4. Vorrichtung (1) nach einem der vorhergehenden Ansprüche, bei der die Druckmittel (15) eingerichtet sind, drehbar oder translatorisch beweglich zu sein, während sie Druck auf den Streifen (8) ausüben.

5. Vorrichtung (1) nach einem der vorhergehenden Ansprüche, wobei der Kopf (3) abnehmbar am Arm (2) angebracht ist.

6. Vorrichtung (1) nach einem der vorhergehenden Ansprüche, wobei die Vorrichtung mindestens zwei motorisierte Arme (2) und mindestens zwei Köpfe (3) aufweist, wobei die Arme jeweils einen jeweiligen Kopf tragen.

7. Vorrichtung (1) nach einem der vorhergehenden Ansprüche, wobei die Abwickelmittel aus einem Rollenpaar bestehen, und wobei das Rollenpaar ein erstes Paar und der Streifen ein erster Streifen ist, der Kopf ferner mindestens ein zweites Rollenpaar aufweist, das zum Abwickeln eines zweiten Streifens eingerichtet ist, und Druckmittel, die zum Ausüben von Druck auf den zweiten Streifen eingerichtet sind.

8. Vorrichtung (1) nach einem der vorhergehenden Ansprüche, wobei die Druckmittel (15) mindestens einen Stempel (18) aufweisen.

9. Vorrichtung (1) nach dem vorhergehenden Anspruch, wobei der Stempel (18) eingerichtet ist, mindestens einen Abschnitt des Streifens (8) zu schneiden.

10. Vorrichtung (1) nach einem der Ansprüche 8 oder 9, bei der der Stempel (18) abnehmbar am Kopf (3) angebracht ist.

11. Vorrichtung (1) nach einem der Ansprüche 8 bis 10, wobei der Kopf (3) mehrere Stempel (18) aufweist.

12. Vorrichtung (1) nach dem vorhergehenden Anspruch, bei der der Stempel (18) unterschiedliche Größen und/oder Formen haben.

13. Vorrichtung (1) nach einem der vorhergehenden Ansprüche, wobei die Druckmittel (15) eingerichtet sind, einen Druck zwischen 30 und 40 kg/cm² auf den Streifen (8) auszuüben.

14. Vorrichtung (1) nach einem der vorhergehenden Ansprüche, aufweisend Mittel zum Erhitzen der Druckmittel (15) auf eine Temperatur zwischen 120°C und 250°C, vorzugsweise zwischen 200°C und 215°C.

15. Heißprägeverfahren unter Verwendung einer Vorrichtung (1) nach einem der Ansprüche 1 bis 14.

16. Heißprägeverfahren nach Anspruch 15, **dadurch gekennzeichnet, dass**:
- eine Bewegung des motorisierten Arms (2), der den Kopf (3) trägt, gesteuert wird und eine Drehung des Kopfes in Bezug auf den Arm gesteuert wird, um den Kopf gegenüber einer Oberfläche anzuordnen, die dazu bestimmt ist, heiß markiert zu werden,
- ein Druck zwischen 30 und 40 kg/ cm² mit Hilfe der Druckmittel (15) auf den Streifen (8) ausgeübt wird, der die Dekorfolie (13) aufweist, der gegen die Oberfläche gedrückt wird, die heiß markiert werden soll, und auf eine Temperatur zwischen 120°C und 250°C, vorzugsweise zwischen 200°C und 215°C, erhitzt wird.

17. Verfahren nach Anspruch 16, bei dem der Kopf (3) gegen einen anderen Kopf ausgetauscht wird, nachdem die Oberfläche, die heiß markiert werden soll, heiß markiert wurde.

18. Verfahren nach Anspruch 16, bei dem die Druckmittel (15) einen Stempel (18) aufweisen, der einem zu dekorierenden Bereich entspricht, wobei das Verfahren ferner einen Schritt aufweist, bei dem der Stempel durch einen anderen Stempel mit anderen Abmessungen und/oder einer anderen Form ausgetauscht wird.

19. Verfahren nach Anspruch 16 und Anspruch 2, bei dem, nachdem die vorhergehenden Schritte eine Heißmarkierung der Oberfläche mit einem der dekorativen Muster der Dekorfolie (13) bewirkt haben, das Verfahren ferner die folgenden Schritte aufweist:
- Steuern einer Bewegung des motorisierten Arms (2), der den Kopf (3) trägt, und Steuern einer Drehung des Kopfes in Bezug auf den Arm, um den Kopf gegenüber einer Oberfläche anzuordnen, die dazu bestimmt ist, heiß markiert zu werden und die sich von der zuvor heiß markierten Oberfläche unterscheidet,
- Abrollen des Streifens (8) vor dem Kopf derart, dass ein Abschnitt der Dekorfolie (13), der ein dekoratives Muster mit einer Form und/oder Farbe und/oder Textur aufweist, das sich von dem des zuvor aufgebrachten dekorativen Musters unterscheidet, gegenüber den Druckmitteln (15) platziert wird,
- Ausüben eines Drucks zwischen 30 und 40 kg/cm² mit Hilfe der Druckmittel (15) auf den Streifen (8), der das dekorative Muster (13) aufweist, das gegen die Oberfläche gedrückt wird, die heiß geprägt werden soll, und auf eine Temperatur zwischen 120°C und 250°C, vorzugsweise zwischen 200°C und 215°C, erhitzt wird.

## Claims

1. Device (1) for hot stamping a part of a vehicle body (16), comprising:
- a strip (8) comprising a carrier film (14) and a decorative film (13);
- at least one motorized arm (2) capable of moving;
- at least one head (3) mounted movably in rotation on one end of the arm, the head comprising pressure means (15) capable of applying pressure on the strip; and
- means (9, 10, 11, 12) for unwinding the strip at the front of the head, **characterized in that** the head (3) comprises the unwinding means (9, 10, 11, 12) and/or the strip (8).

2. Device (1) according to claim 1, wherein the decorative film (13) comprises several decorative patterns that follow one another along the decorative film, at least one of the decorative patterns having a shape and/or a color and/or a texture that is different from the other decorative patterns.

3. Device (1) according to any one of the preceding claims, wherein the pressure means (15) are capable of pressing the strip (8) against the part of a vehicle body (16).

4. Device (1) according to any one of the preceding claims, wherein the pressure means (15) are capable of being movable in rotation or in translation while applying pressure to the strip (8).

5. Device (1) according to any one of the preceding claims, wherein the head (3) is removably mounted on the arm (2).

6. Device (1) according to any one of the preceding claims, wherein the device comprises at least two motorized arms (2) and at least two heads (3), the arms each carrying a respective head.

7. Device (1) according to any one of the preceding claims, the unwinding means are made up of a pair of rollers, and the pair of rollers being a first pair and the strip being a first strip, the head further comprises at least one second pair of rollers capable of unwinding a second strip and pressure means capable of applying pressure to the second strip.

8. Device (1) according to any one of the preceding claims, wherein the pressure means (15) comprise at least one stamp (18).

9. Device (1) according to the preceding claim, wherein the stamp (18) is able to cut at least a portion of the strip (8).

10. Device (1) according to any one of claims 8 or 9, wherein the stamp (18) is removably mounted on the head (3).

11. Device (1) according to any one of claims 8 to 10, wherein the head (3) comprises several stamps (18).

12. Device (1) according to the preceding claim, wherein the stamps (18) have different dimensions and/or shapes.

13. Device (1) according to one of the preceding claims, wherein the pressure means (15) are suitable for applying a pressure of between 30 and 40 kg/cm² on the strip (8).

14. Device (1) according to any one of the preceding claims, comprising means for heating the pressure means (15) to a temperature between 120°C and 250°C, preferably between 200°C and 215°C.

15. Hot stamping method using a device (1) according to any one of claims 1 to 14.

16. Hot stamping method according to claim 15, **characterized in that**:
- a movement of the motorized arm (2) carrying the head (3) is controlled and a rotation of the head relative to the arm is controlled so as to have the head facing a surface intended to be hot stamped,
- applying pressure between 30 and 40 kg/cm² using pressure means (15) on the strip (8) comprising the decorative film (13) pressed against the surface intended to be hot stamped, and heating to a temperature between 120°C and 250°C, preferably between 200°C and 215°C.

17. Method according to claim 16, wherein the head (3) is changed for another head after having hot stamped the surface intended to be hot stamped.

18. Method according to claim 16, wherein the pressure means (15) comprise a stamp (18) corresponding to an area to be decorated, the method further comprising a step in which the stamp is changed for another stamp having different dimensions and/or a different shape.

19. Method according to claim 16 and claim 2, wherein, the previous steps having made it possible to carry out hot stamping of the surface with one of the decorative patterns of the decorative film (13), the method further comprises the following steps:
- controlling a movement of the motorized arm (2) carrying the head (3) and controlling a rotation of the head relative to the arm so as to have the head facing a surface intended to be hot stamped that is different from the surface previously hot stamped,
- unwinding the strip (8) at the front of the head so as to place a portion of the decorative film (13) facing the pressure means (15), said portion comprising a decorative pattern having a shape and/or a color and/or a texture which is different from that of the decorative pattern previously applied,
- applying pressure between 30 and 40 kg/cm² using pressure means (15) on the strip (8) comprising the decorative pattern (13) pressed against the surface intended to be hot stamped, and heating to a temperature between 120°C and 250°C, preferably between 200°C and 215°C.
